(19) Europäisches Patentamt / European Patent Office / Office européen des brevets

(11) **EP 4 077 898 B1**

(12) **EUROPEAN PATENT SPECIFICATION**

(45) Date of publication and mention of the grant of the patent:
**19.06.2024 Bulletin 2024/25**

(21) Application number: **20799724.8**

(22) Date of filing: **05.11.2020**

(51) International Patent Classification (IPC):
**F02C 1/08** (2006.01)   **F02C 3/34** (2006.01)
**H01M 8/04111** (2016.01)   **H01M 8/0612** (2016.01)
**H01M 8/0668** (2016.01)

(52) Cooperative Patent Classification (CPC):
**F02C 1/08; F02C 3/34; H01M 8/04014;**
**H01M 8/04022; H01M 8/04067; H01M 8/04201;**
**H01M 8/0662; H01M 8/0668; H01M 8/12;**
F05D 2260/61; H01M 2008/1293; H01M 2250/407;
Y02E 60/50

(86) International application number:
**PCT/EP2020/081054**

(87) International publication number:
**WO 2021/121762 (24.06.2021 Gazette 2021/25)**

(54) **ENERGY CONVERSION SYSTEM**

ENERGIEUMWANDLUNGSSYSTEM

SYSTÈME DE CONVERSION D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2019 IT 201900024162**

(43) Date of publication of application:
**26.10.2022 Bulletin 2022/43**

(73) Proprietor: **ENI S.p.A.**
**00144 Roma (IT)**

(72) Inventors:
• **MARTELLI, Emanuele**
**29020 Vigolzone (PC) (IT)**
• **CAMPANARI, Stefano**
**23900 Lecco (LC) (IT)**
• **GATTI, Manuele**
**26013 Crema (CR) (IT)**
• **SCACCABAROZZI, Roberto**
**20825 Barlassina (MB) (IT)**

(74) Representative: **Studio Torta S.p.A.**
**Corso Magenta, 56**
**20123 Milano (IT)**

(56) References cited:
**US-A1- 2002 043 064    US-A1- 2002 174 659**
**US-A1- 2006 188 761    US-A1- 2007 163 822**
**US-B2- 7 306 871    US-B2- 7 862 938**

EP 4 077 898 B1

## Description

### BACKGROUND

Field of the Invention

The present invention refers to an energy conversion system, which converts gaseous fuels into electricity.

Description of the Related Art

The Allam cycle is an oxy-combustion cycle in which a combination of pure oxygen and methane, natural gas or syngas is burnt at high pressure using a large flow rate of recycled $CO_2$ as temperature moderator. The combustor working pressure is "supercritical" and a regenerator is used to preheat the recycled stream. The Allam cycle is reported to be able to achieve a 55 - 60 % net electric efficiency with 100 % $CO_2$ capture. The cycle operates with a turbine inlet temperature of 1100 - 1300 °C (1373-1573 K) (requiring blade cooling and directionally-solidified superalloys) and a regenerator inlet temperature of 650 - 750 °C (923-1023K) (requiring special alloys, like Ni-based alloy materials such as Inconel 617).

Document US 7709118 B2 discloses a regenerative atmospheric Solid Oxide Fuel Cell / Gas Turbine (SOFC-GT) hybrid cycle where the turbine exhaust gases are fed to the SOFC cathode. The fuel cell is placed downstream of the turbine, operating at atmospheric pressure. The gas turbine cycle uses air as working fluid without an Air Separation Unit (ASU) and not a $CO_2$-rich mixture. The system does not separate and make available a stream of nearly pure $CO_2$.

Document US 7306871 B2 discloses a hybrid cycle integrating a regenerative gas turbine with a SOFC placed upstream of the combustor. This system uses air as working fluid without an air separation unit and an oxy-combustion unit. A $CO_2$-rich recycle streams are not used as temperature moderator. As a result, this system does not make available a stream of nearly pure $CO_2$.

Document US 9228494 B2 discloses a hybrid SOFC-inverted Brayton cycle featuring atmospheric fuel cell and combustor. The SOFC anode outlet flow, available at atmospheric pressure, is used in the combustor. The system features a lower degree of integration between the thermodynamic cycle and the SOFC because the cathode outlet stream is not sent to the combustor as oxidizing agent. The cathode working pressure is atmospheric and the Brayton cycle configuration is the "inverted" one (with atmospheric pressure at the combustor and sub atmospheric pressure at the turbine outlet) without $CO_2$-rich gas recycle and regenerator.

A further energy conversion system according to the prior art is disclosed in US 2007/163822 A1.

### SUMMARY

It is the object of the present invention to provide an energy conversion system, which converts gaseous fuels (for example, but not limited to, natural gas, syngas, biogas, biomethane, light hydrocarbons, hydrogen) or liquid fuels (for example, but not limited to, light hydrocarbons, alcohol, methanol, DME), into electricity with the possibility to capture the generated $CO_2$ in an efficient way.

This and other objects are achieved by an energy conversion system according to the claim 1. The dependent claims define possible advantageous embodiments of the invention.

The idea underlying the invention consists of providing a system, which integrates a Solid Oxide Fuel Cell (SOFC) unit working in pressurized conditions up to high pressures (5 - 500 bar) with a semi-closed oxy-combustion cycle, which uses the heat and the unconverted fuel and oxidant streams discharged by the fuel cell. The oxy-combustion cycle is a semi-closed Brayton cycle featuring $CO_2$ as the main working fluid. If the SOFC unit working pressure is above the critical one, the Brayton cycle becomes a supercritical $CO_2$ cycle. Although with lower efficiency, the system can also work with maximum cycle pressures below the $CO_2$ critical one (73.8 bar). Thus, the $CO_2$ stream is the working fluid of both the thermodynamic cycle and the SOFC unit. Another peculiarity of the system is the use of the unconverted $O_2$ discharged by the SOFC unit within the combustor of the semi-closed Brayton cycle.

The system is referred to as "*Solid Oxide Semi-closed $CO_2$ cycle - SOSCO2*".

An advantage of the present system is that the power plant has zero emissions of pollutants and greenhouse gases, if the separated $CO_2$ stream is captured and stored.

Moreover, the claimed system can achieve net electric efficiencies (LHV basis) higher than conventional technologies (75 % compared to 55 - 62 % of natural gas combined cycles and 55 - 60 % of the Allam cycle) thanks to the optimized integration with the SOFC unit.

The present system has a superior operational flexibility (i.e., more independent operative variables) compared to conventional gas turbine cycles, as it likely allows achieving higher part-load efficiency and lower minimum turndown ratio. Such operational flexibility is a very important feature for todays and future power plants due to the increasing penetration of intermittent renewables in the electric grid.

Furthermore, the present system provides a higher net electric efficiency (75 % vs. 55 - 60 %) which cannot be achieved by the Allam cycle and similar oxy-turbine cycles even using the most advanced gas turbine materials, such as advanced single crystal super alloys.

The operating conditions of the turbine are considerably less severe and suitable for uncooled turbines. As a comparison, in the Allam cycle, the turbine has an inlet temperature of 1100 - 1250 °C (1373-1523K). The claimed system, can achieve close-to-optimal efficiency with turbine inlet temperatures of 800 - 900 °C (1073-1173K), temperatures suitable for uncooled expander units and less expensive materials (more conventional super-alloys, avoiding the necessity of directionally solidified and single crystal blades), and slightly higher efficiency (with up to 1 % increase) with turbine inlet temperatures of 1000 - 1100 °C (1273-1373K) with limited cooling. Very high efficiencies, above 70 %, can be achieved even using an uncooled expander featuring an inlet temperature below 900 °C (1173K).

Another advantage is the less severe operating temperatures of the regenerator placed at the outlet of the turbine compared to the Allam cycle. In the claimed system the optimal turbine outlet temperature is in the range 400 - 600 °C (673-873K), which are also here compatible with less costly materials (e.g., medium-high grade steel, ferritic stainless steels or conventional austenitic stainless steels). In the Allam cycle, the turbine discharges at temperatures in the range 650 - 750 °C (923-1023K), making it necessary to use very expensive nickel-based alloys (e.g., Inconel 617).

At the same time the combustor operates with lower thermal duty (the majority of fuel chemical energy is converted into the fuel cell) and lower maximum temperatures, corresponding to the turbine inlet conditions, with respect to the Allam cycle.

## BRIEF DESCRIPTION OF THE DRAWINGS

In order to better comprehend the invention and appreciate the advantages thereof, some exemplifying non-limiting embodiments will be described in the following with reference to the attached figures, illustrating an energy conversion system according to possible embodiments of the invention.

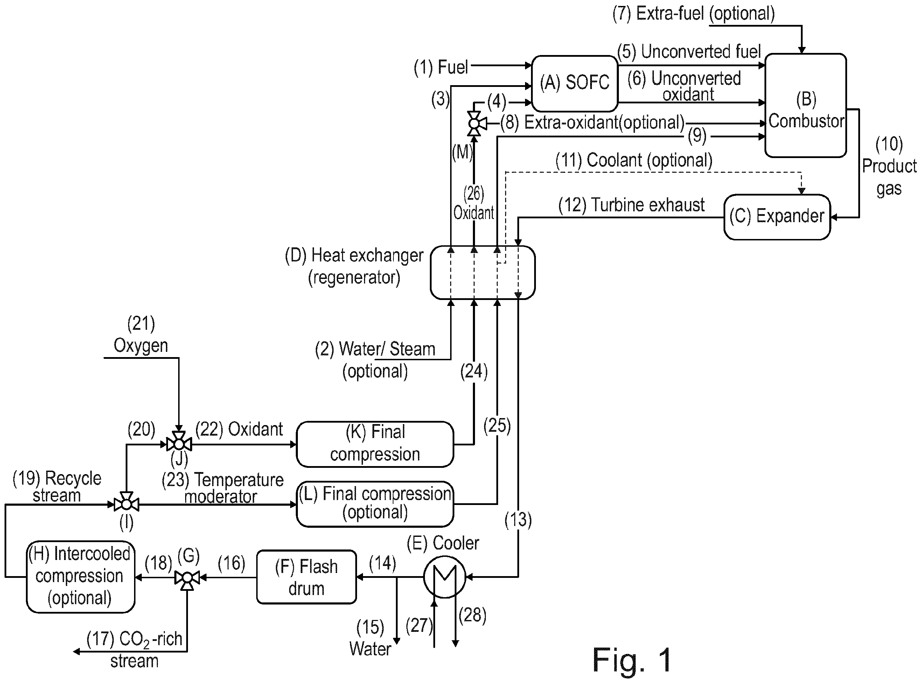

Figure 1 is a process flow diagram of the present energy conversion system according to a first embodiment of the invention. The system according to the first embodiment comprises:

- A SOFC unit **A**, partially converting fuel **1** and oxidant **4** directly into electricity via electrochemical reactions;
- A combustor **B**, performing the combustion of the unconverted fuel **5** and unconverted oxidant **6** discharged from the SOFC unit **A** with the optional injection of a recycled $CO_2$-rich stream **9** and/or additional fuel **7** and/or additional oxidant **8**;
- An expander **C**, expanding the combustor outlet gases **10** to generate mechanical power.
- An optional heat exchanger **D**, recovering the heat of the hot flue gases **12** to preheat the oxidant stream **24,26**, the recycle stream used as temperature moderator **25,9**, the optional turbine coolant **11**, and the optional water/steam for the SOFC **2,3**;
- A cooler **E**, cooling down the exhaust gases **13** and transferring the heat to the environment (for example to a stream of water **27,28**) taken from a river, lake, sea, or to the air) or to another process/system;
- A flash-drum separator **F**, separating the condensed species **15** (mainly water) from the cooled stream **14** of $CO_2$-rich exhaust gases;
- A splitter **G**, dividing the stream to be extracted **17** from the one **16** exiting the flash drum **F**;
- An optional compressor train **H**, comprising one or more compressor units with optional intercoolers to pressurize the recycled stream (**18**) to a suitable pressure to be mixed with the oxygen stream **21**;
- A splitter **I**, separating the recycle stream **19** in the temperature moderator of the combustor **23** and a $CO_2$-rich stream **20** to dilute the oxygen **21**;
- A mixer **J**, producing the oxidant mixture **22**;
- A compressor train **K**, comprising one or more compressor units with optional intercoolers to pressurize the oxidant stream **22,24** to the pressure level required by the SOFC **A** and combustor **B**;
- An optional compressor train **L**, comprising one or more compressor units with optional intercoolers to pressurize the recycle stream **23,25** to the pressure level required by the SOFC **A** and combustor **B**;
- A splitter **M**, dividing the oxidant stream **26** in two flows, the first one **4** used in the SOFC unit **A** and the second one **8** (optional) used in the combustor **B**.

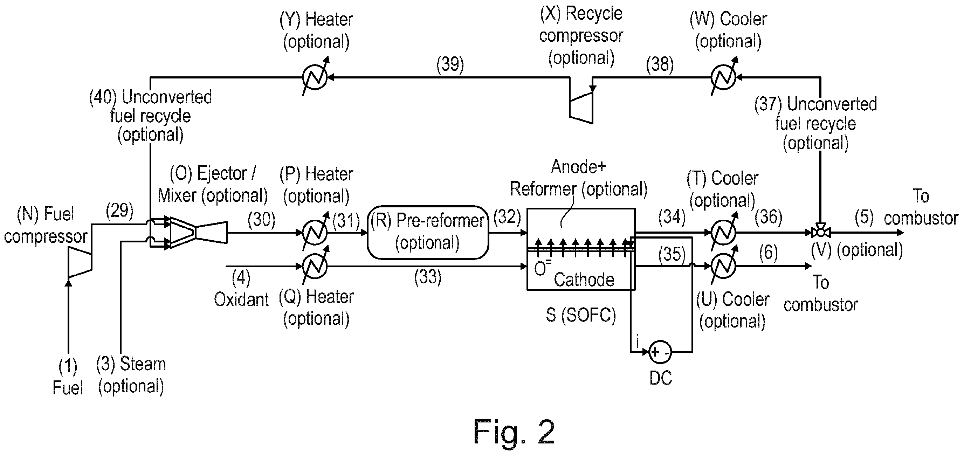

Figure 2 is a possible scheme configuration for the SOFC unit of the energy conversion system in Figure 1. The system comprises:

- A compressor train **N**, comprising one or more compressor units with optional intercoolers to pressurize the fuel 1 to the pressure level required by the SOFC **A** and combustor **B**;

- An optional mixer **O**, which can be used also as an ejector to compress an optional stream recycled from the anode outlet **40** and/or to mix the fuel **29** with a steam flow **3** to obtain a suitable chemical composition of the stream **30** to be fed at the anode side of the SOFC unit **S**;
- An optional heater **P**, recovering heat from the SOFC **S** outlet streams and/or from hot process streams to heat up the anode mixture **30** to the temperature level required by the SOFC **S** or by the optional pre-reformer **R**;
- An optional heater **Q**, recovering heat from the SOFC **S** outlet streams and/or from another process/system to heat up the cathode mixture **4** to the temperature level required by the SOFC **S**;
- An optional external pre-reformer **R**, which can recover heat directly from the electrochemical reaction occurring within the SOFC unit **S** and/or from another process/system, converting the anode mixture **31** to obtain a suitable chemical composition to operate the SOFC unit **S**;
- A SOFC unit **S**, converting the chemical energy of the anode mixture **32** in direct electrical current using the oxygen provided by the cathode mixture **33**;
- An optional cooler **T**, transferring heat from the stream at the anode outlet **34** to another process/system and/or to the ambient and obtaining a stream **36** at the temperature required by combustor;
- An optional cooler **U**, transferring heat from the stream at the cathode outlet **35** to another process/system and/or to the environment (e.g., cooling water) and obtaining a stream **6** at the temperature required by combustor;
- An optional splitter **V**, dividing the unconverted fuel **36** to a stream to be fed to the combustor **5** and a recycled flow **37** to be mixed with the fuel **29**;
- An optional cooler **W**, transferring heat from the (optional) recycled unconverted fuel **37** to another process/system and/or to the environment and obtaining a stream **38** at the temperature required by compressor train **X**;
- An optional compressor train **X**, pressurizing the recycled unconverted fuel **38** to overcome the pressure drops across the anode side;
- An optional heater **Y**, recovering heat from the hot streams exiting the SOFC unit **S** and/or the optional cooler **W** and/or from another process/system to preheat the recycled unconverted fuel **39**;

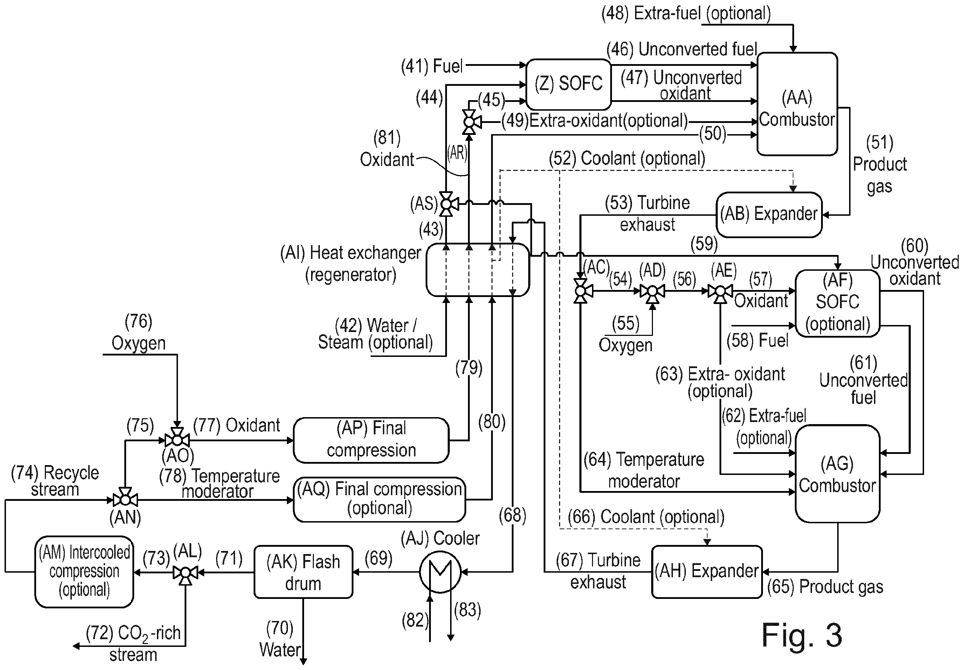

Figure 3 is a process flow diagram of the claimed energy conversion system according to a second embodiment of the invention. The system comprises:

- A SOFC unit **Z**, partially converting fuel **41** and oxidant **44** directly into electricity via electrochemical reactions;
- A combustor **AA**, performing the combustion of the unconverted fuel **45** and unconverted oxidant **46** discharged from the SOFC unit **Z** with the optional injection of a recycled $CO_2$-rich stream **49** and/or additional fuel **47** and/or additional oxidant **48**;
- An expander **AB**, expanding the combustor outlet gases **50** to generate mechanical power (cooling flows **51** may be required depending on the turbine inlet temperature);
- A splitter **AC**, dividing the expanded gasses **53** in two streams, the first one **53** used to be mixed with an oxygen stream **54** and the second one **63** to be used as temperature moderator in the second combustor **AG**;
- A mixer **AD**, producing the oxidant mixture **55**;
- A splitter **AE**, dividing the oxidant stream **55** in two flows, the first one **56** used in the second SOFC unit **AF** and the second one **62** (optional) used in the second combustor **AG**;
- An optional second SOFC unit **AF**, converting fuel **58** and oxidant **56** directly into electricity via electrochemical reactions;
- A second combustor **AG**, performing the combustion of the unconverted fuel **60** and unconverted oxidant **69** discharged from the SOFC unit **AF** with the injection of the first turbine **AB** exhaust stream **63** and/or additional fuel **61** and/or additional oxidant **62**;
- A second expander **AH**, expanding the combustor outlet gases **64** to generate mechanical power (cooling flows **65** may be required depending on the turbine inlet temperature);
- An optional heat exchanger **AI**, recovering the heat of the hot flue gases **66** to preheat the oxidant stream **78,80**, the recycle stream used as temperature moderator **79,49**, optional water/steam for the SOFCs **42,41** and optional turbine coolant **51,65**;
- A cooler **AJ**, cooling down the exhaust gases **68** and transferring the heat to the environment (for example to a stream of water **81,82** taken from a river, lake, sea, or to the air) or to another process/system;
- A flash drum separator **AK**, separating the condensed species **69** (mainly water) from the cooled stream **68** of $CO_2$-rich exhaust gases;
- A splitter **AL**, dividing the stream to be extracted **71** from the one **70** exiting the flash-drum **AK**;
- An optional compressor train **AM**, comprising one or more compressor units with optional intercoolers to pressurize the recycled stream **72** to a suitable pressure to be mixed with the oxygen stream **75**;

- A splitter **AN**, separating the recycle stream **73** in the temperature moderator of the combustor **77** and a $CO_2$-rich stream **74** to dilute the oxygen **75;**
- A mixer **AO**, producing the oxidant mixture **76**;
- A compressor train **AP**, comprising one or more compressor units with optional intercoolers to pressurize the oxidant stream **76,78** to the pressure level required by the SOFC **Z** and combustor **AA**;
- A compressor train **AQ**, comprising one or more compressor units with optional intercoolers to pressurize the recycle stream **77,79** to the pressure level required by the SOFC **Z** and combustor **AA**;
- A splitter **AR**, dividing the oxidant stream **80** in two flows, the first one **44** used in the SOFC unit **Z** and the second one **48** (optional) used in the combustor **AA**;
- A splitter **AS,** dividing the optional water/steam **41** in two flows, the first one **43** used in the SOFC unit **Z** and the second one **57** used in the second SOFC unit **AF.**

## DETAILED DESCRIPTION

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The present disclosure, in at least one of the aforementioned aspects, can be implemented according to one or more of the following embodiments, optionally combined together.

For the purpose of the present description and of the appended claims, the words "a" or "an" should be read to include one or at least one and the singular also includes the plural unless it is obvious that it is meant otherwise. This is done merely for convenience and to give a general sense of the disclosure.

Figures 1-3 show embodiments of an energy conversion system and parts thereof according to the invention.

The energy conversion system according to the invention comprises:

1) One Solid Oxide Fuel Cell (SOFC) unit **A** having an anode and a cathode side, receiving a fuel **1** and a steam of oxidant **4** for converting a fraction of chemical power of fuel **1** directly into electric power through a plurality of electrochemical reactions occurring on the anode and the cathode side of the SOFC unit **A.** Parts of the fuel and of the oxidant remain unconverted, i.e. they are not directly converted into electric power by the SOFC;

2) One combustor unit **B** for converting unconverted fuel **5** and unconverted oxidant **6** into product gas **10**, said combustor unit **B** being arranged to receive the unconverted fuel **5** and unconverted oxidant **6** from the SOFC unit **A**;

3) One expander unit **C** for expanding the gas exiting the combustor **B**, said expander unit **C** being arranged to receive the product gas **10** from the combustor **B**;

4) One cooler unit **E** for reducing the temperature of flue gas **12** exiting from the expander unit **C** to a temperature close to the one of a heat sink **27** (such as a lake, river, sea, air, cold streams of other plants). The exiting stream **14**, which is $CO_2$-rich, contains condensed species;

5) One flash drum unit **F** for removing the condensed species **15** from the $CO_2$-rich stream **14**; and

6) A first compression unit **K** for increasing the pressure of the oxidant **22** to the value required by the SOFC unit **A** and the combustor unit **B**.

In a first embodiment (Figure 1), the energy conversion system comprises a high-pressure Solid Oxide Fuel Cell (SOFC) **A** with a semi-closed oxy-combustion Brayton cycle using $CO_2$ as moderator of the combustion temperature. The maximum cycle pressure and the SOFC unit **A** operating pressure are preferably above the critical pressure of $CO_2$ (i.e., > 73.9 bar). In the above-mentioned conditions, the semi-closed Brayton cycle is a supercritical $CO_2$ cycle with advantages in terms of efficiency.

The energy conversion system can use either a gaseous or a liquid fuel **1**. The fuel shall be pressurized, optionally preheated, then is fed to the anode of the SOFC unit **A** while the oxidant mixture containing $CO_2$ and $O_2$ **4,** preheated in a regenerative heat exchanger **D**, is fed to the SOFC cathode side.

The SOFC unit **A** converts a fraction of the chemical power (e.g., in the range 30 - 90 %, tunable depending on the desired performance) of the fuel directly into electric power through the electrochemical reactions occurring on the anode and cathode sides and involving hydrogen oxidation:

$$H_2 + \tfrac{1}{2}\,O_2 \rightarrow H_2O + 2e^- \quad \text{(anode)} \qquad \text{(Eq. 1)}$$

$$\tfrac{1}{2}\,O_2 + 2e^- \rightarrow O^= \quad \text{(cathode)} \qquad \text{(Eq. 2)}$$

with the addition, although with a slower kinetics, of carbon monoxide oxidation:

$$CO + \tfrac{1}{2} O_2 \rightarrow CO_2 + 2e^- \quad \text{(anode)} \qquad \text{(Eq. 3)}$$

The SOFC unit **A** can be designed to run either with or without internal reforming (e.g., adopting specific catalysts, such as Ni-based materials typically used for commercially available SOFCs ), depending on the type of fuel to be used; in the case of natural gas feeding, methane is converted into hydrogen within the cell according to the reactions of steam reforming and water gas shift:

$$CH_4 + H_2O \rightarrow CO + 3\,H_2 \quad \Delta H^0_{298K} = 205.9 \text{ kJ/mol} \qquad \text{(Eq. 4)}$$

$$CO + H_2O \rightarrow CO_2 + H_2 \quad \Delta H^0_{298K} = -41.1 \text{ kJ/mol} \qquad \text{(Eq. 5)}$$

The reforming reaction, which is highly endothermic, occurs exploiting available heat from the cell losses (thus converting heat into chemical energy, with an advantage for the system electric efficiency) and is driven by the consumption of hydrogen allowed by the electrochemical reactions (Eq. 1,2).

Steam required for hydrocarbons reforming can be supplied directly stream **3** and/or through recycling a fraction of the stream exiting the anode **40**. In the latter case, either an ejector (**O**) or a fan **X** capable of withstanding high gas temperatures can provide the pressure head required to sustain the stream recycle.

The compressed fuel entering the power plant can therefore be mixed with part of the stream recycled from the anode outlet **40** and/or with steam **3** (which can be generated in the heat exchanger **D**). Then, the stream entering the anode side can be preheated within the SOFC unit **A** to the final operating temperature (e.g., 700 - 850 °C) using the thermal power made available by the electrochemical process, through either a dedicated heat exchanger **P** (e.g., cooling the product streams) or internally in the fuel cell stack.

Alternatively, and following recent R&D tendencies for new types of intermediate and low temperature SOFC units (e.g. running from 600 to 800°C, i.e. 873 to 1073K), the SOFC can be designed to run directly on natural gas (or other high methane fraction hydrocarbon mixture), developing internally direct oxidation reactions:

$$CH_4 + 4O^= \rightarrow H_2O + CO_2 + 8e^- \quad \text{(anode)} \qquad \text{(Eq. 6)}$$

$$2O_2 + 8e^- \rightarrow 4O^= \qquad \text{(cathode)} \quad \text{(Eq. 7)}$$

In this case the SOFC unit can be fed directly with methane without needing a preliminary mixing with steam or recycled anode exhaust.

The unconverted fuel and oxygen leaving the SOFC unit **A** are sent to the combustor unit **B** of the semi-closed cycle. Optionally, to moderate the flame temperature, it is possible to recycle a fraction of the combustion products (stream **23**).

Vice versa, optionally, to increase the flame temperature and/or the combustor unit **B** outlet temperature, it is possible to inject fuel and/or oxidant directly into the combustor **B** additional fuel **7** and oxidant **8**. To increase the efficiency of the proposed system, as a further option, it is possible to preheat the oxidant **26**, the temperature moderator **9** and the other streams of the system (e.g., the turbine cooling flows **11**, if these are required) in a multi-flow regenerator **D**. Optionally, if the concentration of fuel and/or oxygen is too low, a catalytic combustor unit **B** can also be used.

The combustion products **10** are mainly $CO_2$ and $H_2O$, and may contain also some amounts of $O_2$, Ar, $N_2$ and other chemical species.

The product gases are expanded in an expander **C** to a lower pressure, indicatively in the range 1 - 50 bar. However, such value depends on the other pressures and temperatures of the cycle, and it may not be limited to such range. Depending on the fuel utilization factor (fraction of the inlet fuel oxidized electrochemically within the fuel cell) of the SOFC unit **A**, its operative temperature, and the mass flow rate of the stream used as temperature moderator in the combustor unit **B**, the turbine inlet temperature can be higher or lower, requiring to adopt a cooled or uncooled expander **C**.

If the expander unit **C** needs to be cooled (because the gas inlet temperature is above the maximum allowed operating temperature of the turbine materials), the cooling flows **11** can be taken from the stream of recycled $CO_2$ and can be preheated in the regenerator **D**. The product gases **10** leaving the turbine are cooled in the regenerator **D** and then in a cooler **E** to a temperature approaching that of the heat sink (e.g., lake, river, sea, air, cold streams of other plants). Most of the $H_2O$ of the product gases condenses, and it is separated with a gas-liquid separator **F**, such as a flash drum. The outlet gas stream leaving the separator **16** is rich in $CO_2$. A fraction can be recycled **18** to be used as temperature moderator and/or to be mixed with the oxygen stream **21** and/or used as turbine cooling flow **11** while the remaining part **17** can be separated and either vented into the atmosphere or sent to the $CO_2$ purification and utilization/storage system. When compressing the recycle $CO_2$-rich stream above the critical pressure, if water condenses, it is possible to use a liquid-liquid separation process to remove further water.

Depending on the specifications of the final destination of $CO_2$ (e.g., an injection well for enhanced oil recovery or any other storage or utilization option), it could be necessary to treat the separated $CO_2$ stream in a $CO_2$ purification unit (a conventional plant capable of producing nearly pure liquid $CO_2$).

It is also possible to recover heat in the regenerator **D** from the main compressor of the Air Separation Unit (ASU) and/or the intercoolers of the compressors **H,K,L** and/or from nearby heat sources. This can result in a further improvement of the efficiency of the proposed energy conversion system.

For systems using natural gas and 99.5 % purity $O_2$ produced by a commercially available cryogenic air separation unit, the best performance of the system is achieved adopting the operating parameters reported in Table 1.

Table 1 - indicative ranges of operating pressures and temperatures for the key streams.

| Type of parameter | Operating range |
|---|---|
| Working pressure of the SOFC **(A)** and combustor **(B)** units | 5 - 500 bar |
| Expander **(C)** outlet pressure | 1 - 50 bar |
| Working temperature of the SOFC unit **(A)** | 600 - 1000 °C |
| Expander **(C)** inlet temperature | 800 - 1500 °C |
| Temperature of the temperature moderator **(9)** and oxi- dant stream **(26)** leaving the regenerator **(D)** | 400 - 800 °C |

It is worth noting that the system is capable of working with good efficiencies also if the operating conditions are outside the above-specified ranges, even if the SOFC unit **A** and combustor unit **B** pressures are below the critical pressure of $CO_2$.

In another exemplary embodiment, it also possible to use a second oxidation stage after the expansion (reheating configuration), adding a second SOFC unit **AF** and/or a second combustor unit **AG** optionally feeding additional fuel **61** and oxidant **62.** Then the working fluid can be further expanded in a second expander **AH** before entering the regenerator **AI** (see Figure 3). This scheme can further increase the power output of the plant and lead to a lower specific investment cost (total plant cost / net electric power), specially for designs featuring one SOFC, two combustors and two expanders. This second embodiment could also feature a wider operational range thanks to the possibility of adjusting the fuel flow rate fed to the different SOFCs and/or combustors.

Simulation and optimization of a possible embodiment of the energy conversion system

The cycle shown in Figure 1 has been modelled using a process simulation software and its efficiency has been optimized using a systematic optimization algorithm.

The assumptions at the basis of the process simulation are reported in the following:

- No extra-oxidant and no extra-fuel are used in the combustor (i.e., streams **8** and **7** have zero mass flow rate).

- The regenerator **H** is used to preheat the streams of temperature moderator **9**, cooling flows **11**, oxidant **26** and to evaporate water and superheat steam **3.**

- Fuel is a natural gas with composition reported in Table 2:

Table 2 - Composition of the fuel considered in the simulation example

| Type of molecule | Composition, molar basis |
|---|---|
| $CH_4$ | 89.00 % |
| $C_2H_6$ | 7.00 % |
| $C_3H_8$ | 1.00 % |
| i-$C_4H_{10}$ | 0.05 % |
| n-$C_4H_{10}$ | 0.05 % |
| i-$C_5H_{12}$ | 0.005 % |
| n-$C_5H_{12}$ | 0.005 % |

(continued)

| Type of molecule | Composition, molar basis |
|---|---|
| $CO_2$ | 2.00 % |
| $N_2$ | 0.89 % |

- The oxygen is provided at 120 bar and 15 °C (288K), thus compressor **H** pressurizes stream **19** to 120 bar.

- Stream **2** is liquid water at 15 °C (288K), 1.013 bar.

- An oxygen stream corresponding to 3 % of excess with respect to the stoichiometric condition (considering the oxygen already available in the working fluid) is used to produce the oxidant stream.

- The GERG-2008 equation of state is used to estimate the thermo-physical properties of the streams (to this regard, see: O. Kunz, and W. Wagner, "The GERG-2008 wide-range equation of state for natural gases and other mixtures: An expansion of GERG-2004", Journal of Chemical and Engineering Data, vol. 57(11), pp. 3032-3091, 2012, doi: 10.1021 /je300655b).

- The turbine efficiency and cooling flow requirement are computed according to the model presented in R. Scaccabarozzi, M. Gatti, and E. Martelli, "Thermodynamic analysis and numerical optimization of the NET Power oxy-combustion cycle", Applied Energy, vol. 178, pp. 505-526, 2016, doi: 10.1016/j.apenergy.2016.06.060, with isentropic efficiency of the expansion steps of 89% and maximum metal temperature allowed by the blade materials of 860 °C.

- Isentropic efficiencies of 90 % and 85 % are assumed respectively for the vapor and supercritical compressor stages.

- A relative pressure drop of 5 % (with respect to the inlet pressure) is considered for the stream exiting the turbine. The value is progressively reduced in the intercooled compression as to reach a value of 1 % at the cold side of the regenerator.

- Two minimum temperature approaches are used in the regenerator: 5 °C (278K) is assumed at the cold side to maximize the heat recovery, 20 °C (293K) is used at the hot end to limit the required heat transfer area at high temperatures.

- A cooling water temperature of 15 °C (288K) is assumed.

- A minimum approach temperature of 11 °C (284K) is assumed for the coolers (exchanging heat with cooling water), leading a minimum temperature of the working fluid in the condenser and intercoolers of 26 °C (299K).

As far as the SOFC unit is concerned, the assumptions are the following:

- The optional heaters **P, Q, Y** and coolers **T, U, W** are not used.
- The recycle stream **37** is used to recycle a fraction of the anode outlet flow (containing useful water and unconverted fuel species) to the anode inlet.
- A recycle compressor **X** with isentropic efficiency 0.7 is used.
- The pressurized SOFC unit operates with a ratio between the carbon and oxygen atoms equal to 2.5, chosen to prevent coking on the anode electrode.
- A maximum value of power per unit of area of 0.5 $W/cm^2$ (corresponding to a specific current of around 0.6 $A/cm^2$) has been assumed to avoid risks of excessive thermal stresses.
- The SOFC unit Area-Specific Resistance (ASR) is assumed to be 0.28 $\Omega/cm^2$, comprehensive of all the losses affecting the fuel cell stack (e.g., activation, ohmic, concentration), while the alternator converting the direct current to alternate current is assumed to be characterized by an efficiency of 98 %.
- To avoid concentration losses which would reduce the conversion efficiency, a maximum utilization factor (fraction of the fed fuel oxidized within the SOFC unit, this value is different from the one referred to the fuel cell stack if the recycle at the anode side is not null) of 85 % and a minimum concentration of oxygen at the cathode outlet of 10 %$_{mol}$ are considered.
- The relative pressure drop across the SOFC unit is fixed at 0.5 %.

Under the above-listed assumption, the proposed system still can be designed and operated in a large variety of conditions due to the possibility of varying (i) the SOFC **A** unit and combustor **B** operative pressure, (ii) the expander **C** outlet pressure, (iii) the fraction of the unconverted fuel **40** recycled back to the anode inlet, (iv) the mass flow rate of the temperature moderator **9** of the combustor, (v) the regenerator outlet temperature of the oxidant **26**, temperature moderator **9** and steam **3**, (vi) the regenerator outlet temperature of the expander cooling flows **11**, and (vii) the fraction of the recycled **20** stream mixed with the oxygen to produce the oxidant flow. To determine the most efficient design and operating conditions, the above listed independent variables have been optimized using a systematic process optimization approach.

The objective function to be maximized is the net electric efficiency (net electric power output of the integrated system divided the chemical power of the inlet fuel, LHV basis). The optimization constraints considered in this example are summarized in Table 3:

Table 3 - Technical constraints considered in the optimization example.

| Parameter | Value | |
|---|---|---|
| Concentration of oxygen at the SOFC cathode outlet **(35)** $\%_{mol}$ (minimum) | 10 | $\%_{mol}$ |
| Concentration of water at the SOFC anode outlet **(34)** (maximum) | 60 | $\%_{mol}$ |
| Temperature difference within the regenerator **(D)** (minimum) | 5 | °C |
| Temperature difference at the hot end of the regenerator **(D)** (min- imum) | 20 | °C |
| Expander **(C)** allowed metal temperature (maximum) | 860 | °C |
| C/O at the SOFC **(A)** anode inlet | 2.5 | - |

In the optimization it is assumed that the oxidant, the temperature moderator and the steam for the SOFC unit exit the regenerator at the same temperature. Moreover, it is assumed that the oxidant provides 3 % excess of oxygen compared to the stoichiometric condition.

The optimization problem has been tackled using an optimization algorithm specifically developed for process and energy system optimization purposes.

The optimization results are reported in Table 4:

Table 4 - Key results of the optimization and simulation example.

| Parameter | Value | |
|---|---|---|
| Natural gas flow rate | 10.75 | kg/s |
| Natural gas LHV | 46.49 | MJ/kg |
| Oxygen mass flow rate | 40.37 | kg/s |
| Total recycle mass flow rate | 148.2 | kg/s |
| Turbine inlet mass flow rate | 187.7 | kg/s |
| SOFC operating pressure | 352.7 | bar |
| SOFC operating temperature | 800.0 | °C |
| Turbine inlet pressure | 349.2 | bar |
| Turbine inlet temperature | 1 025.9 | °C |
| Turbine outlet pressure | 14.5 | bar |
| Turbine outlet temperature | 521.0 | °C |
| Recycle stream temperature at SOFC inlet | 501.0 | °C |
| SOFC electric power output | 340 640 | kW |
| Turbine blade power output | 128 193 | kW |
| Compressor blade power consumption | 25 597 | kW |
| Air Separation Unit power consumption | 56 148 | kW |
| Net power output | 377 050 | kW |
| Fuel thermal input (LHV basis) | 500.0 | MW |
| Net electric efficiency | 75.41 | % |

The SOFC produces 72.7 % of the plant gross power output while the turbine accounts for the remaining 27.3 %.

The intercooled compression and the ASU are the two major penalties, consuming 5.5 % and 12.0 % of the gross power output respectively.

The compression of the captured $CO_2$, sent to the storage, account only for 0.8 % percent and the remaining auxiliaries for 0.9 % of the gross production.

The resulting net electric efficiency is 76.2 % without $CO_2$ capture (i.e., venting the excess $CO_2$ not recycled), and 75.4 % with $CO_2$ capture.

The resulting performance indexes are outstanding compared to state-of-the-art as well as advanced energy systems (with and without $CO_2$ capture) which feature efficiencies in the range 60 - 63 % for the systems without capture, and 40 - 46 % for the systems with capture.

**Claims**

1. An energy conversion system comprising:

   - a Solid Oxide Fuel Cell (SOFC) unit (A) having an anode and a cathode side, configured for receiving a fuel (1) and a stream of oxidant (4) and for converting a fraction of chemical power of the fuel (1) directly into electric power through one or more electrochemical reactions occurring on the anode and the cathode side of the SOFC unit (A) involving said fuel (1) and said oxidant (4), parts of the fuel (1) and of the stream of oxidant (4) being maintained unconverted following said electrochemical reactions;
   - a combustor unit (B) arranged to receive the unconverted fuel (5) and the unconverted oxidant (6) from the SOFC unit (A), configured for the combustion of the unconverted fuel (5) using the unconverted oxidant (6), thereby converting the unconverted fuel (5) and the unconverted oxidant (6) into product gas (10);
   - an expander unit (C) arranged to receive the product gas (10) exiting the combustor (B) and configured for expanding said product gas (10) exiting the combustor (B) into flue gas (12);
   - a cooler unit (E) in thermal relationship with a heat sink (27) and configured for cooling said flue gas (12) exiting the expander unit (C);
   - a separator (F) for removing condensed species (15) from the cooled gas (14) exiting the cooler unit (E), thereby obtaining a recycled stream (18);
   - a mixer (J), producing said stream of oxidant by mixing at least a part of the recycled stream (18) with an external oxygen stream (21);
   - a first compression unit (K) configured for increasing the pressure of said oxidant (26, 4, 8) to a value suitable for the SOFC unit (A) and the combustor unit (B), wherein said increased pressure oxidant is used by the SOFC unit (A); and
   - a splitter (M) dividing the increased pressure oxidant stream in a first flow (4) used in the SOFC unit (A) and in a second flow (8) used in the combustor (B).

2. The energy conversion system according to claim 1, wherein the SOFC unit (A) is configured to work with an oxidant stream (4) composed of a mixture of $CO_2$ and oxygen.

3. The energy conversion system according to any one of the preceding claims, wherein the SOFC unit (A) is configured to work at pressures comprised in the range between 5 and 500 bar.

4. The energy conversion system according to the claim 3, wherein the SOFC unit (A) is configured to work at pressures comprised in the range between 250 and 360 bar.

5. The energy conversion system according to any one of the preceding claims, wherein the SOFC unit (A) is configured to work at temperatures comprised in the range between 650 and 850 °C.

6. The energy conversion system according to any one of the preceding claims, wherein the expander unit (C) is configured such that the flue gas outlet pressure is between 1 and 50 bar.

7. The energy conversion system according to the claim 6, wherein the expander unit (C) is configured such that the flue gas outlet pressure is between 10 and 30 bar.

8. The energy conversion system according to any one of the preceding claims, wherein the combustor unit (B) is configured for combusting additional fuel (7) and/or an additional oxidant (8) in addition to said unconverted fuel (5) and to said unconverted oxidant (6) exiting from the SOFC unit (A).

9. The energy conversion system according to any one of the claims 1-8, wherein the SOFC unit (A) is configured to run with an internal reforming process.

10. The energy conversion system according to any one of the claims 1-8, wherein the SOFC unit (A) is configured to run with a pre-reforming process (R).

**11.** The energy conversion system according to any one of the preceding claims, wherein the combustor unit (B) is a catalytic combustion unit.

**12.** The energy conversion system according to any one of the preceding claims, further comprising a heat exchanger unit (D) for preheating at least one of the streams entering the SOFC (A) and/or the combustor (B), wherein said heat exchanger unit (D) is in thermal relationship with the expander (C) exhaust gas and/or with other hot streams of the energy conversion system itself and/or with one or more further plants.

**13.** The energy conversion system according to any one of the preceding claims, further comprising one or more heater and/or one or more cooler (P,Q,T,U,W,Y) for modifying the temperatures of the streams entering and/or exiting the SOFC to desired values.

**14.** The energy conversion system according to any one of the preceding claims, further comprising a second compressor unit (H) for compressing said recycled stream (18), thereby obtaining a compressed recycled stream (19).

**15.** The energy conversion system according to the claim 14, further comprising a third compressor unit (L) for compressing at least a portion (23) of said compressed recycled stream (19) to a pressure suitable for the combustor (B).

**16.** The energy conversion system according to any one of the preceding claims, wherein the SOFC unit is configured for further receiving a stream of steam (3).

**17.** The energy conversion system according to any one of the preceding claims, further comprising at least a second SOFC unit (**AF**) and/or at least a second combustor unit (**AG**) after the expander unit.

**Patentansprüche**

**1.** Energieumwandlungssystem, umfassend:

- eine Festoxidbrennstoffzellen(SOFC)-Einheit (A) mit einer Anoden- und einer Kathodenseite, die konfiguriert ist zum Aufnehmen eines Brennstoffs (1) und eines Stroms von Oxidationsmittel (4) und zum Umwandeln eines Bruchteils von chemischer Leistung des Brennstoffs (1) direkt in elektrische Leistung durch eine oder mehrere elektrochemische Reaktionen, die auf der Anoden- und der Kathodenseite der SOFC-Einheit (A) stattfinden, an denen der Brennstoff (1) und das Oxidationsmittel (4) beteiligt sind, wobei Teile des Brennstoffs (1) und des Stroms von Oxidationsmittel (4) nach den elektrochemischen Reaktionen unumgewandelt bleiben;
- eine Brennkammereinheit (B), die angeordnet ist, den nicht umgewandelten Brennstoff (5) und das nicht umgewandelte Oxidationsmittel (6) von der SOFC-Einheit (A) zu empfangen und für die Verbrennung des nicht umgewandelten Brennstoffs (5) unter Verwendung des nicht umgewandelten Oxidationsmittels (6) konfiguriert ist, wodurch der nicht umgewandelte Brennstoff (5) und das nicht umgewandelte Oxidationsmittel (6) in Produktgas (10) umgewandelt werden;
- eine Expandereinheit (C), die angeordnet ist, das aus der Brennkammer (B) austretende Produktgas (10) aufzunehmen und konfiguriert ist, das aus der Brennkammer (B) austretende Produktgas (10) zu Rauchgas (12) zu expandieren;
- eine Kühlereinheit (E), die in thermischer Verbindung mit einer Wärmesenke (27) ist und zum Kühlen des aus der Expandereinheit (C) austretenden Rauchgases (12) konfiguriert ist;
- einen Separator bzw. Abscheider (F) zum Entfernen kondensierter Spezies bzw. Stoffe (15) aus dem gekühlten Gas (14), das aus der Kühlereinheit (E) austritt, wodurch ein recycelter Strom (18) erhalten wird;
- einen Mischer (J), der den Strom von Oxidationsmittel durch Mischen zumindest eines Teils des recycelten Stroms (18) mit einem externen Sauerstoffstrom (21) erzeugt;
- eine erste Kompressionseinheit (K), die zum Erhöhen des Drucks des Oxidationsmittels (26, 4, 8) auf einen für die SOFC-Einheit (A) und die Brennkammereinheit (B) geeigneten Wert konfiguriert ist, wobei das im Druck erhöhte Oxidationsmittel von der SOFC-Einheit (A) verwendet wird; und
- einen Teiler bzw. Splitter (M), der den im Druck erhöhten Oxidationsmittelstrom in einen ersten Strom (4), der in der SOFC-Einheit (A) verwendet wird, und einen zweiten Strom (8), der in der Brennkammer (B) verwendet wird, aufteilt.

**2.** Energieumwandlungssystem nach Anspruch 1, wobei die SOFC-Einheit (A) konfiguriert ist, mit einem Oxidationsmittelstrom (4) zu arbeiten, der aus einer Mischung aus $CO_2$ und Sauerstoff besteht.

3. Energieumwandlungssystem nach einem der vorhergehenden Ansprüche, wobei die SOFC-Einheit (A) konfiguriert ist, bei Drücken in dem Bereich zwischen 5 und 500 bar zu arbeiten.

4. Energieumwandlungssystem nach Anspruch 3, wobei die SOFC-Einheit (A) konfiguriert ist, bei Drücken in dem Bereich zwischen 250 und 360 bar zu arbeiten.

5. Energieumwandlungssystem nach einem der vorhergehenden Ansprüche, wobei die SOFC-Einheit (A) konfiguriert ist, bei Temperaturen in dem Bereich zwischen 650 und 850 °C zu arbeiten.

6. Energieumwandlungssystem nach einem der vorhergehenden Ansprüche, wobei die Expandereinheit (C) so konfiguriert ist, dass der Rauchgasausgangsdruck zwischen 1 und 50 bar beträgt.

7. Energieumwandlungssystem nach Anspruch 6, wobei die Expandereinheit (C) so konfiguriert ist, dass der Rauchgasausgangsdruck zwischen 10 und 30 bar beträgt.

8. Energieumwandlungssystem nach einem der vorhergehenden Ansprüche, wobei die Brennkammereinheit (B) zum Verbrennen von zusätzlichem Brennstoff (7) und/oder einem zusätzlichen Oxidationsmittel (8) zusätzlich zu dem nicht umgewandelten Brennstoff (5) und dem nicht umgewandelten Oxidationsmittel (6), das aus der SOFC-Einheit (A) austritt, konfiguriert ist.

9. Energieumwandlungssystem nach einem der Ansprüche 1-8, wobei die SOFC-Einheit (A) konfiguriert ist, mit einem internen Reformierungsprozess zu laufen.

10. Energieumwandlungssystem nach einem der Ansprüche 1-8, wobei die SOFC-Einheit (A) konfiguriert ist, mit einem Vorreformierungsprozess (R) zu laufen.

11. Energieumwandlungssystem nach einem der vorhergehenden Ansprüche, wobei die Brennkammereinheit (B) eine katalytische Brenneinheit ist.

12. Energieumwandlungssystem nach einem der vorhergehenden Ansprüche, ferner umfassend eine Wärmetauschereinheit (D) zum Vorwärmen zumindest eines der in die SOFC (A) und/oder die Brennkammer (B) eintretenden Ströme, wobei die Wärmetauschereinheit (D) in thermischer Verbindung mit dem Abgas des Expanders (C) und/oder mit anderen heißen Strömen des Energieumwandlungssystems selbst und/oder mit einer oder mehreren weiteren Anlagen ist.

13. Energieumwandlungssystem nach einem der vorhergehenden Ansprüche, ferner umfassend einen oder mehrere Heizer und/oder einen oder mehrere Kühler (P, Q, T, U, W, Y) zum Modifizieren der Temperaturen der Ströme, die in die SOFC eintreten und/oder aus dieser austreten, auf gewünschte Werte.

14. Energieumwandlungssystem nach einem der vorhergehenden Ansprüche, ferner umfassend eine zweite Kompressoreinheit (H) zum Verdichten des recycelten Stroms (18), wodurch ein verdichteter recycelter Strom (19) erhalten wird.

15. Energieumwandlungssystem nach Anspruch 14, ferner umfassend eine dritte Kompressoreinheit (L) zum Verdichten zumindest eines Teils (23) des verdichteten recycelten Stroms (19) auf einen für die Brennkammer (B) geeigneten Druck.

16. Energieumwandlungssystem nach einem der vorhergehenden Ansprüche, wobei die SOFC-Einheit zum weiteren Aufnehmen eines Stroms von Dampf (3) konfiguriert ist.

17. Energieumwandlungssystem nach einem der vorhergehenden Ansprüche, ferner umfassend zumindest eine zweite SOFC-Einheit (AF) und/oder zumindest eine zweite Brennkammereinheit (AG) nach der Expandereinheit.


**Revendications**

1. Système de conversion d'énergie comprenant :

- une unité de pile à combustible à oxyde solide (SOFC) (A) présentant un côté anode et un côté cathode, configurée pour recevoir un combustible (1) et un flux d'oxydant (4) et pour convertir une fraction de puissance chimique du combustible (1) directement en énergie électrique par l'intermédiaire d'une ou de plusieurs réactions électrochimiques se produisant sur le côté anode et le côté cathode de l'unité de SOFC (A) impliquant ledit combustible (1) et ledit oxydant (4), des parties du combustible (1) et du flux d'oxydant (4) étant maintenues non converties après lesdites réactions électrochimiques ;

- une unité de chambre de combustion (B) agencée pour recevoir le combustible non converti (5) et l'oxydant non converti (6) en provenance de l'unité de SOFC (A), configurée pour la combustion du combustible non converti (5) en utilisant l'oxydant non converti (6), ce qui permet de convertir le combustible non converti (5) et l'oxydant non converti (6) en un gaz produit (10) ;

- une unité de détendeur (C) agencée pour recevoir le gaz produit (10) sortant de la chambre de combustion (B) et configurée pour provoquer l'expansion dudit gaz produit (10) sortant de la chambre de combustion (B) afin d'obtenir un gaz de combustion (12) ;

- une unité de refroidisseur (E) en relation thermique avec un dissipateur thermique (27) et configurée pour refroidir ledit gaz de combustion (12) sortant de l'unité de détendeur (C) ;

- un séparateur (F) pour éliminer des espèces condensées (15) du gaz refroidi (14) sortant de l'unité de refroidissement (E), ce qui permet d'obtenir un flux recyclé (18) ;

- un mélangeur (J), produisant ledit flux d'oxydant en mélangeant au moins une partie du flux recyclé (18) à un flux d'oxygène externe (21) ;

- une première unité de compression (K) configurée pour augmenter la pression dudit oxydant (26, 4, 8) à une valeur appropriée pour l'unité de SOFC (A) et l'unité de chambre de combustion (B), dans lequel ledit oxydant dont la pression a été augmentée est utilisé par l'unité de SOFC (A) ; et

- un diviseur (M) divisant le flux d'oxydant dont la pression a été augmentée en un premier écoulement (4) utilisé dans l'unité de SOFC (A) et en un deuxième écoulement (8) utilisé dans la chambre de combustion (B).

2. Système de conversion d'énergie selon la revendication 1, dans lequel l'unité de SOFC (A) est configurée pour fonctionner avec un flux d'oxydant (4) composé d'un mélange de $CO_2$ et d'oxygène.

3. Système de conversion d'énergie selon l'une quelconque des revendications précédentes, dans lequel l'unité de SOFC (A) est configurée pour fonctionner à des pressions situées dans la plage comprise entre 5 et 500 bar.

4. Système de conversion d'énergie selon la revendication 3, dans lequel l'unité de SOFC (A) est configurée pour fonctionner à des pressions situées dans la plage comprise entre 250 et 360 bar.

5. Système de conversion d'énergie selon l'une quelconque des revendications précédentes, dans lequel l'unité de SOFC (A) est configurée pour fonctionner à des températures situées dans la plage comprise entre 650 et 850 °C.

6. Système de conversion d'énergie selon l'une quelconque des revendications précédentes, dans lequel l'unité de détendeur (C) est configurée de sorte que la pression de sortie de gaz de combustion soit comprise entre 1 et 50 bar.

7. Système de conversion d'énergie selon la revendication 6, dans lequel l'unité de détendeur (C) est configurée de sorte que la pression de sortie de gaz de combustion soit comprise entre 10 et 30 bar.

8. Système de conversion d'énergie selon l'une quelconque des revendications précédentes, dans lequel l'unité de chambre de combustion (B) est configurée pour brûler un combustible supplémentaire (7) et/ou un oxydant supplémentaire (8) en plus dudit combustible non converti (5) et dudit oxydant non converti (6) sortant de l'unité de SOFC (A).

9. Système de conversion d'énergie selon l'une quelconque des revendications 1 à 8, dans lequel l'unité de SOFC (A) est configurée pour fonctionner avec un processus de reformage interne.

10. Système de conversion d'énergie selon l'une quelconque des revendications 1 à 8, dans lequel l'unité de SOFC (A) est configurée pour fonctionner avec un processus de pré-reformage (R).

11. Système de conversion d'énergie selon l'une quelconque des revendications précédentes, dans lequel l'unité de chambre de combustion (B) est une unité de combustion catalytique.

12. Système de conversion d'énergie selon l'une quelconque des revendications précédentes, comprenant en outre une unité d'échangeur de chaleur (D) pour préchauffer au moins l'un des flux entrant dans la SOFC (A) et/ou la chambre de combustion (B), dans lequel ladite unité d'échangeur de chaleur (D) est en relation thermique avec les gaz d'échappement du détendeur (C) et/ou avec d'autres flux chauds du système de conversion d'énergie lui-même et/ou avec une ou plusieurs autres installations.

13. Système de conversion d'énergie selon l'une quelconque des revendications précédentes, comprenant en outre un ou plusieurs dispositifs de chauffage et/ou un ou plusieurs refroidisseurs (P, Q, T, U, W, Y) pour faire passer les températures des flux entrant dans la SOFC et/ou en sortant à des valeurs souhaitées.

14. Système de conversion d'énergie selon l'une quelconque des revendications précédentes, comprenant en outre une deuxième unité de compresseur (H) pour compresser ledit flux recyclé (18), ce qui permet d'obtenir un flux recyclé compressé (19).

15. Système de conversion d'énergie selon la revendication 14, comprenant en outre une troisième unité de compresseur (L) pour compresser au moins une partie (23) dudit flux recyclé compressé (19) à une pression appropriée pour la chambre de combustion (B).

16. Système de conversion d'énergie selon l'une quelconque des revendications précédentes, dans lequel l'unité de SOFC est configurée pour recevoir en outre un flux de vapeur (3).

17. Système de conversion d'énergie selon l'une quelconque des revendications précédentes, comprenant en outre au moins une deuxième unité de SOFC (**AF**) et/ou au moins une deuxième unité de chambre de combustion (**AG**) après l'unité de détendeur.

Fig. 1

EP 4 077 898 B1

Fig. 2

Fig. 3

EP 4 077 898 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7709118 B2
- US 7306871 B2
- US 9228494 B2
- US 2007163822 A1

**Non-patent literature cited in the description**

- **O. KUNZ ; W. WAGNER.** The GERG-2008 wide-range equation of state for natural gases and other mixtures: An expansion of GERG-2004. *Journal of Chemical and Engineering Data,* 2012, vol. 57 (11), 3032-3091
- **M. GATTI ; E. MARTELLI.** Thermodynamic analysis and numerical optimization of the NET Power oxy-combustion cycle. *Applied Energy,* 2016, vol. 178, 505-526